# EUROPEAN PATENT APPLICATION

(11) **EP 4 442 929 A1**
(43) Date of publication of application: **09.10.2024**
(21) Application number: 24159660.0
(22) Date of filing: 26.02.2024
(51) Int. Cl.: E04G 1/18, B64F 5/40, E04G 5/14, E04G 21/32

(54) **CAM LOCKING SYSTEMS AND METHODS**

(30) Priority: 03.04.2023 US 202318194822
(71) Applicant: The Boeing Company, Arlington, VA 22202 (US)
(72) Inventor: DELAHUNT, Wyatt Thomas, Arlington, 22202 (US); REEVES, Andrew Curtis, Arlington, 22202 (US); SECINARO, Nathan Alphonse, Arlington, 22202 (US)
(74) Representative: Morrall, Jonathan Ian McLachlan

(57) **Abstract**

A system and a method include a cam locking assembly including a support rod having a rod body that extends along an axis, a first rail component having a rail body that extends along the axis and coupled with the support rod and a third rail component, a cam having an interior passage extending along the axis that receives a portion of the support rod and an exterior surface having plural recesses, and guide pins that extend into the plural recesses of the cam and control movement of the cam. Movement of the cam controls movement of the third rail component between a loaded position and an unloaded position.

## Description

### FIELD OF THE DISCLOSURE

Examples of the present disclosure generally relate to cam locking systems and methods for controlling movement of safety rail systems, manufacturers, and operators.

### BACKGROUND OF THE DISCLOSURE

Elevated platforms may be used by operators to access elevated portions of a structure, such as to allow the operators to perform inspections and/or maintenance to the structure. The elevated platforms may include railings that allow the operators to safely stand on top of and move around on the elevated platforms. In some applications, the elevated platforms may be coupled with a support structure that may be moved to different locations to allow the operators to access different parts of the structure.

As one example, the structure may be an aircraft, and the elevated platform may first need to be disposed at a front or forward portion of the aircraft to allow the operators to inspect a propeller of the aircraft. After the inspection of the propeller is complete, the elevated platform may need to be moved, such as toward a rear portion of the aircraft. In order to move the platform, the safety railings may need to be lowered so as to avoid interfering with the wing of the aircraft while the platform is moved. As another example, the safety railings may need to be lowered to allow the aircraft to move past the platform without collision. However, the safety railings may be designed to be lowered manually, such as by an operator standing on the elevated platform. As a result, the operator may be have an increased fall risk while lowering the guard rail while being on the elevated platform and the operator may be left on top of the elevated platform with no safety railings in place, etc., thereby placing the operator is significant danger of falling from the elevated platform and causing bodily injury.

As another example, the safety railings may be raised and/or lowered based on an environment in which the operator is working. For example, the operator may be positioned on a platform that may extend, extend next to, or be disposed proximate to flaps of the aircraft, landing gear of the aircraft, or the like, that may produce and/or create hazardous energy based on whether the areas of the aircraft are operating or functioning. For example, the hazardous energy may include electrical energy, pneumatic energy, hydraulic systems, mechanical energy, and/or gravitational energy sources. The safety railings may be moved into a loaded position to improve the safety of the operator working in close proximity to the hazardous energy, or may be moved into an unloaded position while the environment is no longer generating hazardous energy.

### SUMMARY OF THE DISCLOSURE

A need exists for a system and method for raising and/or lowering safety rail components while an operator is not positioned on an elevated platform. Further, a need exists for a system and method that improves the safety of raising and/or lowering safety rail components relative to the elevated platform.

With those needs in mind, certain examples of the present disclosure provide a cam locking assembly of a rail support system that includes a support rod that has a body that extends along an axis, a first rail component having a first rail body that extends along the axis and is coupled with the support rod and a third rail component, a cam that is coupled with the support rod and has plural recesses extending into an exterior surface of the cam, and one or more guide pins that extend into the recesses of the cam and control movement of the cam. Movement of the cam may control movement of the third rail component between a loaded position and an unloaded position. In one or more examples, the loaded position may be referred to as a locked position, and the unloaded position may be referred to as an unlocked position.

In one or more embodiments, the first rail component, the support rod, and the cam may be concentric with each other about the axis. In at least one example, the cam may move in a first linear direction to move the third rail component into the loaded position, or the cam may move in a second linear direction to move the third rail component into the unloaded position.

In at least one example, the plural recesses of the cam may include one or more locked position recesses and one or more travel path recesses. The guide pins may move along the travel path recess(s) toward and away from the locked position recess(es). In one embodiment, the cam may be prohibited from rotating responsive to the guide pins being disposed in the locked position recess. The locked position recess may be referred to as a safety lock position or a safety lock. The cam may be allowed to move out of the safety lock position by an operator standing on a ground surface moving a portion of the rail assembly. Alternatively, the cam may be allowed to rotate about the axis responsive to the guide pins being disposed in the travel path recess. For example, while the guide pins are disposed in the travel path recess and are not in the locked position recess, the cam may be allowed to move in one or more directions (rotationally, linearly, etc.).

In at least one example, a mounting bracket may include a passage that receives at least a portion of the support rod and/or a portion of the first rail component. The mounting bracket may be coupled with a support structure of the elevated platform. Optionally, the guide pins may be coupled with the mounting bracket, and the cam may move in a rotational direction and linear directions relative to the guide pins and the mounting bracket.

In at least one example, one or more magnetics or magnetic devices may be coupled with the cam locking assembly and may be arranged to encourage movement of the cam in one or more directions. For example, the assembly may include a first magnetic device that is coupled with the mounting bracket or the guide pins, and a second magnetic device that is coupled with the cam, and the first and second magnetic may be arrangement to move toward or away from each other to encourage movement of the cam.

In one or more embodiments, movement of the cam may be activated by an operator. Additionally or alternatively, movement of the cam may be activated by one or more motors, such as a linear motor operably coupled with the cam locking assembly and arranged to move the cam in the first and/or second linear directions.

Certain examples of the present disclosure provide a safety rail support system that may be operably coupled with an elevated platform that includes a first cam locking assembly and a second cam locking assembly. The first cam locking assembly may include a first cam having first recesses configured to receive a first set of guide pins, and the second cam locking assembly may include a second cam having second recesses configured to receive a second set of guide pins. Movement of the first cam and movement of the second cam may control movement of a third rail component between a loaded position and an unloaded position. The third rail component in the loaded position may block access onto or off of the elevated platform, or the third rail component in the unloaded position may allow access onto or off of the elevated platform.

Certain examples of the present disclosure provide a method that includes moving a third rail component of a cam locking assembly into a loaded position, and moving the third rail component into an unloaded position. In the loaded position, the third rail component blocks access onto or off of an elevated platform. In the unloaded position, the third rail component allows access onto or off of the elevated platform.

### BRIEF DESCRIPTION OF THE DRAWINGS

Figure 1 illustrates a schematic of a safety rail support system coupled with an elevated platform and in an unloaded position, according to an example of the present disclosure.
Figure 2 illustrates a schematic of the safety rail support system shown in Figure 1 in a loaded position, according to an example of the present disclosure.
Figure 3 illustrates a front view of the safety rail support system shown in Figures 1 and 2, according to an example of the present disclosure.
Figure 4 illustrates a magnified view of a rail support assembly of the safety rail support system shown in Figure 3.
Figure 5 illustrates a perspective view of a support rod of a rail support assembly, according to an example of the present disclosure.
Figure 6 illustrates a perspective view of a cam of a rail support assembly, according to an example of the present disclosure.
Figure 7 illustrates a cross-sectional front view of a rail support assembly, according to an example of the present disclosure.
Figure 8 illustrates an exploded view of a guide pin assembly, according to an example of the present disclosure.
Figure 9 illustrates plural front views of the cam shown in Figure 6 as the cam rotates about an axis, according to an example of the present disclosure.
Figure 10 illustrates a cross-sectional view of a secondary lock assembly of the rail support assembly, according to an example of the present disclosure.
Figure 11A illustrates a cross-sectional view of the cam shown in Figure 6, according to an example of the present disclosure.
Figure 11B illustrates a cross-sectional view of a cam having an alternative configuration, according to an example of the present disclosure.
Figure 12A illustrates a safety rail support system in an unloaded position, according to an example of the present disclosure.
Figure 12B illustrates the safety rail support system shown in Figure 12A in a loaded position, according to an example of the present disclosure.
Figure 13A illustrates a cam locking system of a work platform in an unloaded state, according to an example of the present disclosure.
Figure 13B illustrates the cam locking system of the work platform shown in Figure 13A in a loaded state, according to an example of the present disclosure.
Figure 14A illustrates a cam locking system in an unloaded state, according to an example of the present disclosure.
Figure 14B illustrates the cam locking system shown in Figure 14A in a loaded state, according to an example of the present disclosure.
Figure 15 illustrates a safety rail support system, according to an example of the present disclosure
Figure 16A illustrates a safety rail support system in a first state, according to an example of the present disclosure.
Figure 16B illustrates the safety rail support system shown in Figure 16A in a second state, according to an example of the present disclosure.
Figure 17A illustrates a cam locking system in a first state, according to an example of the present disclosure.
Figure 17B illustrates the cam locking system shown in Figure 17A in a second state, according to an example of the present disclosure.
Figure 17C illustrates the cam locking system shown in Figure 17A in a third state, according to an example of the present disclosure.
Figure 18 illustrates a cam locking system, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

In at least one example, cam locking systems and methods include rail components that move between loaded positions and unloaded positions. Examples of the subject disclosure provide systems and methods that allow for an operator disposed on a ground surface to move the rail components coupled with an elevated platform between the loaded and unloaded positions. For example, the operator does not need to be standing on the elevated platform to move the rail components between the loaded and unloaded positions. The systems and methods of the subject matter disclosed effectively provide improved safety for the operator to move the rail components between the loaded positions and the unloaded positions.

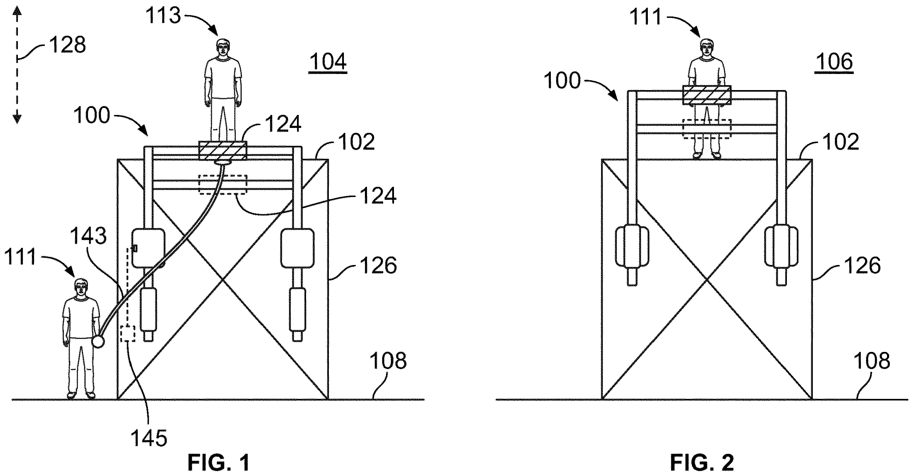

Figure 1 illustrates a schematic of a safety rail support system 100 that is operably coupled with a support structure 126 of an elevated platform 102, according to an example of the present disclosure. Figure 2 illustrates a schematic of the safety rail support system 100 shown in Figure 1. It is to be understood that the safety rail support system 100 and/or the support structure 126 can be sized, shaped, and configured differently than shown in Figures 1 and 2.

The support structure 126 maintains a position of the elevated platform 102 a predetermined distance away from or above a surface 108, such as a ground or floor. The distance may be about 1 meter, about 3 meters, about 5 meters, about 10 meters, or the like. The elevated platform may be an elevated surface on which an operator may stand to access, repair, inspect, or the like, an elevated component. For example, the elevated surface may allow one or more operators 111, 113 to access a portion of an airplane, such as a wing, a fuselage, a stabilizer, or the like. In one example, the support structure and the elevated platform may be moved from a first location to a second location. For example, the support structure may include wheels that may allow the platform to be moved to different locations about an airplane. While the subject matter described herein may be associated with aircraft and aerial vehicles, the elevated platform and the safety rail support system may be used on other non-aerial vehicle, on other mechanical systems, on other non-mechanical systems, in buildings, in exterior or outdoor applications, or the like.

The safety rail support system 100 may move in a linear direction 128 between an unloaded position 104, shown in Figure 1, and a loaded position 106, shown in Figure 2. For example, the elevated platform may need to be moved between a first portion of the fuselage of an aircraft to a second portion of the fuselage of the aircraft. The rail support system may need to be moved from the loaded position to the unloaded position in order to prevent the safety rail support system from colliding with the wing of the aircraft while the support structure is moving. As another example, the rail support system may be used to separate one of the operators from a hazardous area, such as a portion of an aircraft that has hydraulic systems, electric energy, pneumatic systems, or the like. The operators may be standing on the elevated platform, may be standing on the ground surface, or the like. The rail support system may move between the loaded and unloaded positions based on the environment in which the rail support system is disposed. While the rail support system is in the loaded position, railing components of the rail support system may be disposed between the operator(s) and the hazardous energy. Alternatively, while the rail support system is in the unloaded position, the railing components may not be disposed between the operator(s) and the hazardous energy.

In the illustrated embodiments of Figures 1 and 2, while the safety rail support system is in the unloaded position, the safety rail support system is disposed closer to the surface 108 (e.g., in a retracted state). While the safety rail support system is in the loaded position, the safety rail support system is disposed away from the surface 108 (e.g., in an extended state). In the illustrated embodiment, the safety rail support system moves in a substantially vertical direction towards and away from the ground surface. Alternatively, the system may be arranged such that the system moves in a substantially horizontal direction, or any radial direction relative to the ground surface. For example, the safety rail support system may be associated with a railing that extends along a set of stairs, such as stairs to access the elevated platform.

While the safety rail support system is in the unloaded position, a first operator 111 may be prohibited from standing on the elevated surface 102, as shown in Figure 1. Additionally, while the safety rail support system is in the unloaded position, a second operator 113 that is positioned on the elevated surface may have an increased risk of falling and injury relative to the first operator 111. Alternatively, while the safety rail support system 100 is in the loaded position, the operator 111 may be permitted to stand on the elevated surface 102, as shown in Figure 2. For example, the safety rail support system in the loaded position 106 blocks access onto or off of the elevated platform 102, such as to reduce a probability of the operator 111 falling off of the elevated platform. Alternatively, the safety rail support system in the unloaded position 104 allows access onto and/or off of the elevated platform, such as to increase the probability of the operator falling off of the elevated platform.

In one or more examples, the safety rail support system may be assembled with the support structure of the elevated platform at the general time at which the support structure is assembled. In another example, the safety rail support system may be added to or coupled with the support structure after the support structure is erected. For example, the safety rail support system may be retrofitted with the support structure of the elevated platform.

In one or more examples, the safety rail support system may be referred to as a cam locking system. For example, the cam locking system may include rail components that may move between loaded (e.g., locked) and unloaded (e.g., unlocked) positions. While the cam locking system is in the loaded position, movement of operators, equipment, etc., may be controlled. Alternatively, while the cam locking system is in the unloaded position, operators, equipment, etc. may be free to move (e.g., movement may not be controlled or otherwise limited).

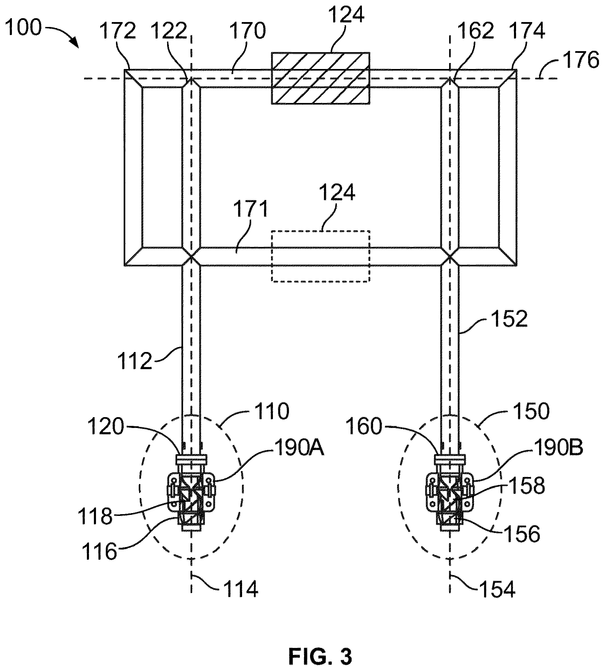

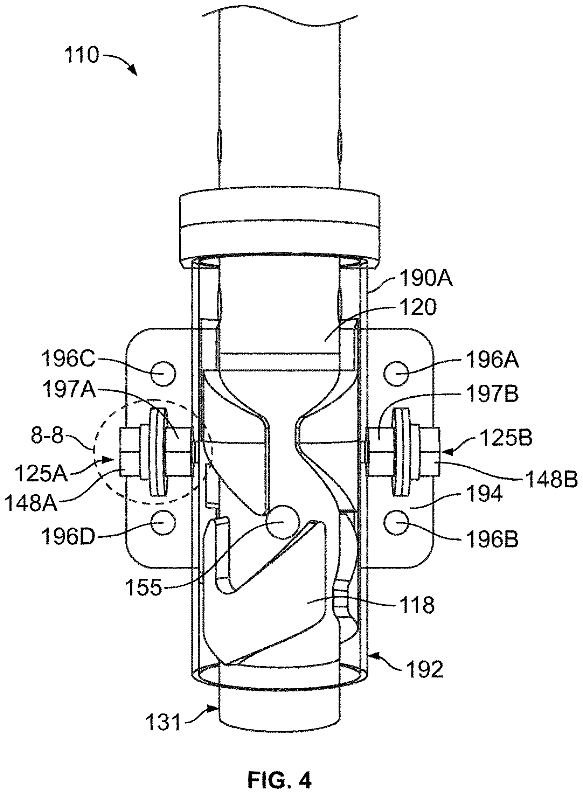

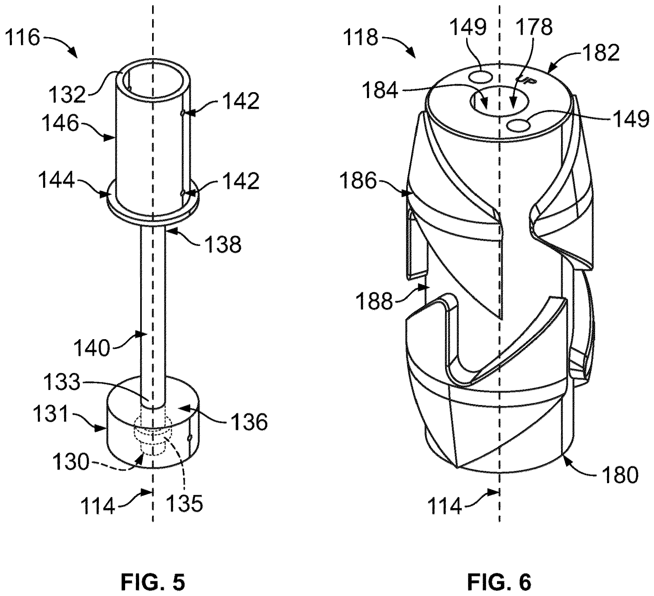

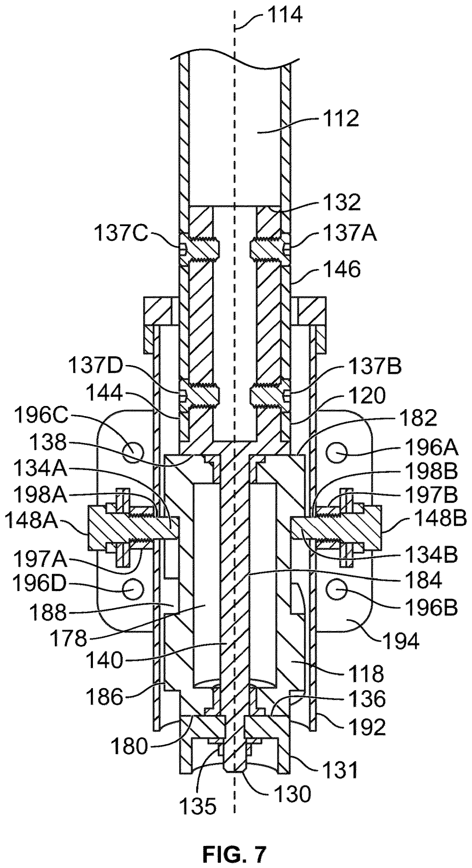

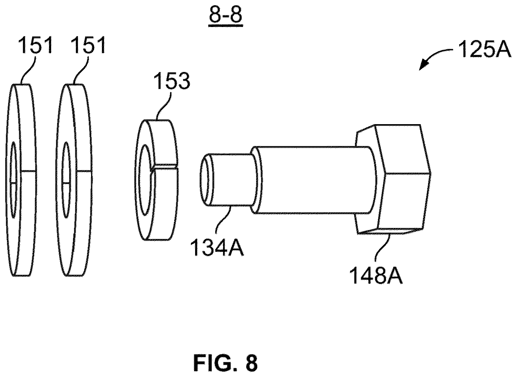

Figure 3 illustrates a front view of the safety rail support system 100 shown in Figures 1 and 2, according to an example of the present disclosure. Figure 4 illustrates a partially transparent front view of a first rail support assembly 110. Figure 5 illustrates a perspective view of a first support rod 116 of the first rail support assembly 110, according to one example of the present disclosure. Figure 6 illustrates a perspective view of a first cam 118 of the first rail support assembly 110. Figure 7 illustrates a cross-sectional front view of the first rail support assembly 110. Figure 8 illustrates an exploded view of a guide pin assembly 125A. Figures 3-8 will be discussed together herein.

The system includes a first rail component 112 that has a first rail body that extends along a first axis 114, a second rail component 152 that has a second rail body that extends along a second axis 154 that is substantially parallel with the first axis 114, and a third rail component 170 that has a third rail body that extends along a third axis 176 that is substantially perpendicular to the first and second axes. In one or more examples, the rail components of the safety rail support system may have alternative labels. For example, the safety rail support system may include one or more horizontally-extending rail components, and one or more vertically-extending rail components. In another example, the safety rail support system may include one or more rail components that extend radially relative to the elevated surface 102 and/or the surface 108. The labels "first", "second", and "third" are arbitrary labels, and are not intended to impose numerical requirements on their objects. The third rail body of the third rail component extends between a first end 172 and a second end 174 along the third axis 176. The first rail body of the first rail component extends between a third end 120 and a fourth end 122 along the first axis 114. The fourth end 122 of the first rail component is operably coupled with the first end 172 of the third rail component. The second rail body of the second rail component extends between a seventh end 160 and an eighth end 162 along the second axis 154. The eighth end 162 of the second rail component is operably coupled with the second end 174 of the third rail component. In the illustrated embodiment, the first, second, and third components are coupled together in a U-shape arrangement of the first, second, and third rail components. The first, second, and third rail components may be coupled together via any typical mechanical coupling method, such as welding, male and female fastener devices, coupling joint components, or the like. In one or more examples, two or more of the rail components may be formed as a single component. For example, the first, second, and third rail components may be a single bar or rod that is formed or bent into the U-shape arrangement. Optionally, the system may include one or more rail components that are arranged in an alternative shape arrangement, such as in a rectangular arrangement, a circular arrangement, or the like.

In one or more examples, the safety rail support system may include a fourth rail component 171 that is coupled with the first and second rail components and extends parallel with the third rail component 170. For example, the third and fourth rail components are horizontally-extending components that may provide additional fall-protection for the operator standing on the elevated surface, for equipment positioned on the elevated surface, or the like.

The rail support system also includes a first rail support assembly 110 and a second rail support assembly 150. The first and second rail support assemblies may also be referred to as first and second cam locking assemblies and/or first and second cam locking systems. In one or more examples, the first rail support assembly 110 and the second rail support assembly 150 may be substantially the same, such that the first and second rail support assemblies may include similar components with the similar components having a similar arrangement, etc. For example, the first rail support assembly may include at least a first support rod 116 and a first cam 118 that are coupled with the first rail component 112, and the second rail support assembly may include at least a second support rod 156 and a second cam 158 that are coupled with the second rail component 152. In another example, the first rail support assembly may have an arrangement, a configuration, and/or one or more components that differs from the arrangement, the configuration, and/or components of the second rail support assembly. In another example, the rail support system may only include a single cam locking system. In another example, the rail support system may include more than two cam locking systems. In another example, the first cam locking system may work independent of the second cam locking system (e.g., the second rail support assembly). For example, the first cam locking system may be coupled with rail components that are separate from rail components of the second cam locking system. Optionally, the rail support system may have any alternative configuration. The first rail support assembly 110 will be described in more detail below with regards to Figures 4-7.

As one example, the safety rail support system 100 may be coupled with the elevated platform (not shown in Figure 3) via first and second mounting brackets 190A, 190B. The first mounting bracket 190A (shown in Figure 4) may be coupled with a first portion of the elevated platform and may maintain a position of the first rail component 112 relative to the elevated platform. Additionally, the second mounting bracket 190B may be coupled with a second portion of the elevated platform and may maintain a position of the second rail component 152 relative to the elevated platform. For example, the first and second mounting brackets may allow the first and second rail components to move in linear directions along the first and second axes, respectively. Additionally, the first and second mounting brackets may prohibit rotation and/or control an amount of rotation of the first and second rail components about the first and second axes, respectively.

The first support rod has a first rod body that includes an extension rod 140 that extends between a first end 130 and a second end 132 along the first axis 114. In the illustrated embodiment, the first end 130 extends through a passage 133 of a mounting component 131, and the position of the first end relative to the passage is maintained by a locking mechanism 135 (e.g., a nut, a bolt, a weld-joint, or the like). The mounting component 131 includes a first mating surface 136, and the second end of the first support rod includes a second mating surface 138 and a third mating surface 144 that is opposite the second mating surface. The first and third mating surfaces face the same first direction, and the second mating surfaces faces a second direction toward the first mating surface. The second end of the first support rod 116 also includes a sleeve 146. In the illustrated embodiment, the sleeve 146 has a substantially circular cross-sectional shape and includes a hollow passage. In alternative embodiments, the sleeve may have an alternative cross-sectional shape. For example, the sleeve may have a cross-sectional shape and/or size that is similar to a cross-sectional shape and/or size of the third end 120 of the first rail component 112. In one example, the sleeve is sized to receive a portion of the first rail component (illustrated in Figure 7). The sleeve also includes plural mating features 142 that may be used to couple the first support rod with the first rail component via plural rail component fasteners 137A-D. For example, the plural rail component fasteners 137A-D may extend through the plural mating features 142 of the sleeve and corresponding passages of the first rail component to couple the first rail component with the first support rod..

The first cam has a first cam body that extends between a first end 180 and a second end 182 along the first axis 114. The cam includes an interior surface 184 that extends around the first axis 114 and defines a first interior passage 178 of the first cam. The first interior passage may be a passage that extends from the first end to the second end of the cam. For example, the first interior passage may have an opening at the first end of the cam and an opening at the second end of the cam.

The first cam also includes an exterior surface 186 that includes plural recesses 188. The recesses extend from the exterior surface toward the interior surface of the first cam. For example, the recesses may be divots, nooks, indentations, depressions, or the like, that extend into the cam and away from the exterior surface of the cam. For example, the exterior surface of the cam may have a first cross-sectional size, and the cam at one of the recesses may have a second cross-sectional size that is smaller than the first cross-sectional size. In one example, the recesses may be shaped and sized to receive at least a portion of the guide pins 134A, 134B (illustrated in Figure 7). The guide pins may extend into the recesses of the cam and may control movement of the cam.

The mounting bracket includes a plate portion 194 that mates with a portion of the support structure of the elevated platform. The plate portion also includes plural coupling features 196A, 196B, 196C, 196D that may be used to couple the mounting bracket with the support structure (not shown). In the illustrated example, the coupling features are holes that may be used to receive bolts, screws, rivets, or the like. Optionally, the mounting bracket may be coupled with the support structure by an alternative coupling method.

The first mounting bracket 190A also includes a sleeve portion 192 that is coupled with the plate portion. The sleeve portion 192 includes one or more surfaces that define a hollow passage that is open to and extends along the first axis 114. In the illustrated example shown in Figure 6, a portion of the first support rod is disposed within the sleeve portion of the first mounting bracket. For example, the first support rod is shaped and sized to fit and move within the sleeve portion of the mounting bracket along the first axis 114.

In one example, the first mounting bracket 190A also includes passages 198A, 198B with fasteners 197A, 197B coupled thereto. For example, the fasteners 197A, 197B may be nuts that may be welded or otherwise mechanically coupled with the passages or sockets of the first mounting bracket. In another example, the fasteners 197A, 197B may be a threaded machined lug that may receive a corresponding bolt or bolt-like portion of the guide pins.

The first rail support assembly 110 also includes one or more guide pin assemblies 125A, 125B. In the illustrated example shown in Figure 4, the first rail support assembly includes one set of two guide pins including a first guide pin 134A and a second guide pin 134B. The first guide pin 134A is coupled with and extends away from one end of the coupling component 148A, and the second guide pin 134B is coupled with and extends away from one end of the coupling component 148B. Figure 8 illustrates an exploded view 8-8 of the guide pin assembly 125A. The guide pin assembly includes a coupling component 148A that may represent a rivet, a bolt, or the like. The first guide pin 134A is disposed at one end of the coupling component. In the illustrated example, the guide pin assembly also includes two washers 151 and a locking washer 153, but optionally the guide pin assembly may include any number of one or more different types of washers, or the like. The washers may be included to maintain a position of the guide pin 134A relative to the plural recesses of the cam.

As shown in Figures 4 and 7, the guide pin assembly 125A may be coupled with the fastener 197A and the guide pin assembly 125B may be coupled with the fastener 197B. Coupling the guide pin assemblies with the fasteners couples the guide pins with the first mounting bracket. The first guide pin 134A of the coupling component 148A is shaped and sized to extend through the passage 198A of the mounting bracket, and the second guide pin 134B of the coupling component 148B is shaped and sized to extend through the passage 198B of the mounting bracket, where the first and second guide pins can extend into plural recesses of the cam.

In another example, the guide pins may be formed as a unitary body with the sleeve portion of the first mounting bracket, and may extend into the hollow passage of the sleeve portion of the first mounting bracket.

In the illustrated example, the extension rod 140 of the first support rod 116 (shown in Figure 5) extends within and disposed within the interior passage 178 of the first cam 118 (shown in Figure 7). For example, the extension rod has a length between the first mating surface 136 and the second mating surface 138 that corresponds to a length of the first cam between the first end 180 and the second end 182 of the first cam along the first axis. Additionally, the third end 120 of the first rail component is operably coupled with the third mating surface 144 of the first support rod 116 proximate the second end 132 of the first support rod.

The first rail component 112, the first support rod 116, and the first cam 118 extend along the first axis 114. Additionally, the first support rod, the first cam, and the first rail component are substantially concentric with each other about the first axis 114. In another example, one of the first rail component, the first support rod, or the first cam may be eccentric with another component of the first rail support assembly. At least a portion of the first rail component, a portion of the first support rod, and a portion of the cam may be disposed within the passage of the first mounting bracket (illustrated in Figure 7), such as while the rail support assembly is in the loaded position. Alternatively, the first support rod and the first cam may be disposed outside of the sleeve portion of the first mounting bracket (not shown), such as while the rail support assembly is in the unloaded position.

In one or more examples, the guide pins 134A, 134B control movement of the first cam 118. For example, as the third rail component moves between the loaded position and the unloaded position, the first cam 118 rotates about the first axis and moves in a linear direction along the first axis based on the configuration of the recesses of the first cam. The location of the pins within the recesses controls a position and/or movement of the third rail component.

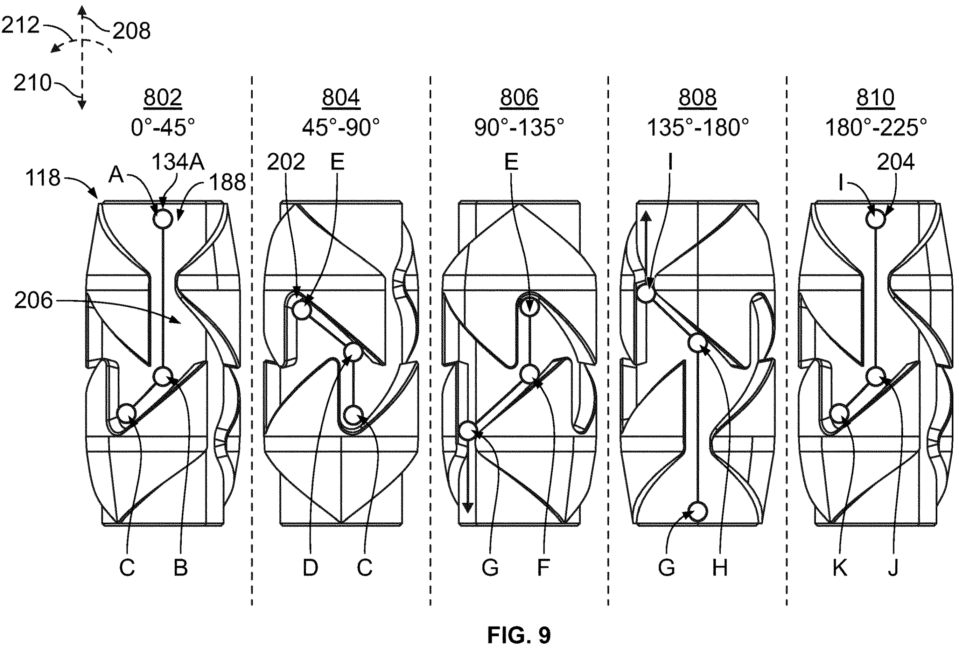

Figure 9 illustrates plural front views of the cam shown in Figure 6 as the cam rotates about the first axis 114, according to an example of the present disclosure. The cam includes plural recesses 188, including a first locked position recess 202 and plural travel path recesses 206. Figure 9 illustrates the first guide pin 134A controlling movement of the first cam. For example, the cam rides on the first guide pin 134A that extends into the plural recesses of the cam. Additionally, the second guide pin 134B (not shown in Figure 9) also controls movement of the first cam. For example, Figure 9 illustrates a front view of the first cam, with the cam moving relative to the first guide pin 134A. The cam may also move relative to the second guide pin extending into recesses at a back view of the first cam.

In a first view 802, the cam rotates in a rotational direction 212 (e.g., a counter-clockwise direction), and as the cam rotates in the counter-clockwise direction 212, the cam moves in one or both of a first linear direction 208 or a second linear direction 210 based on the recesses 188 of the cam. Optionally, the recesses of the cam may be arranged such that the cam may be rotated in the clockwise direction. In the first view 802, the cam may rotate CCW from about 0° to about 45° about the first axis. The rotational movement of the cam causes the cam to move relative to at least one of the guide pins within the recesses from the at least one guide pin being positioned at a point A, to a point B, and to a point C. For example, as the cam rotates about the first axis, the guide pin extending into the recesses causes the cam to move in the first linear direction 208 while the cam rotates to move the guide pin from point A to point C.

A second view 804 illustrates the cam rotating CCW from about 45° to about 90° about the first axis, and the cam moves such that the placement of the guide pin within the recesses moves from the point C, to a point D, and to a point E. The point E may referred to as the first locked position recess 202. For example, the third rail component (shown in Figure 3) may be in the loaded position while the guide pin is in disposed in the first locked position recess 202. While the guide pin is disposed within the first locked position recess, the cam is prohibited from rotating CCW about the first axis. For example, the cam may be prohibited from rotating CCW about the first axis past about 90° responsive to the first guide pin moving into and being disposed within first locked position recess. The position of the third rail component relative to the position of the elevated platform may be relatively unchanged subsequent to the guide pin reaching the first locked position recess.

In one or more examples, in order to move the guide pin out of the first locked position recess, the third rail component may be moved in the first linear direction 208 until the guide pin moves out of the first locked position recess and back into the travel path recess. For example, a third view 806 illustrates the cam moving in the first linear direction 208 to move the guide pin within the recesses from the point E, to a point F, and to a point G while the cam rotates CCW from about 90° to about 135°. For example, moving the rail support assembly including the cam in the first linear direction 208 moves the guide pin out of the first locked position recess, and allows the cam to continue to rotate about the first axis in the CCW direction.

In one or more examples, in order to move the cam in the first linear direction to move the guide pin out of the first locked position recess, an operator of the safety rail support system may manually move the first rail component in the same first linear direction, may manually move the third rail component in the first linear direction thereby causing the first rail component and the cam to move in the same first linear direction, or the like. The operator may be standing on the ground surface 108 and may grab onto a portion of the first rail component to move the first rail component, the third rail component, and thereby the cam, to allow the guide pins to move out of the locked position recesses. As another example, the operator may use a tool 143 (shown in Figure 1) such as, but not limited to, a push rod, a broom stick, an extension rod, or the like, to move the first rail component and thereby causing the guide pin to move out of the first locked position recess.

As another example, the safety rail support assembly may include one or more engagement components (e.g., engagement components 124 shown in Figures 1-3). The engagement component(s) may be a feature that may be formed with the third rail component, may be operably coupled with one of the first, second, third, and/or fourth rail component, may be retrofitted onto one or more of the rail components, or the like. For example, the engagement component may be a bracket, a handle, or the like. The engagement component may include one or more features that may receive the tool 143 (shown in Figure 1), such as an extension rod , or the like. For example, an operator may be standing on the ground surface 108 and may direct the tool 143 to engage with a portion of the engagement component 124. The operator may push the tool and the third or fourth rail component away from the ground surface 108 to activate movement of the cam and the safety rail support system. Pushing the tool away from the ground surface causes the guide pin to move out of the first locked position recess of the cam. For example, at least some travel of the cam in the first linear direction 208 allows the guide pin to move out of the first locked position recess, and the cam to continue to rotate in the CCW direction about the first axis after the tool is released and the safety rail support system moves in the second linear direction 210.

In another example, the cam may include one or more other locked position recesses, such as disposed at different locations between the first end 180 and the second end 182 of the cam. For example, the guide pins may move into the first locked position recesses 202 to maintain a position of the third rail component in the loaded position. Additionally, the guide pins may move into the other locked position recesses to maintain a position of the third rail component at a position between the loaded and the unloaded position. For example, the other locked position recesses may be arranged to allow the third rail component to be stepped up and/or down between the loaded and unloaded positions, to hold the third rail component at a dropped or lowered loaded position (e.g., to move the third rail component closer to the elevated platform relative to the loaded position and to a position between the loaded and unloaded positions), or the like. As another example, one of the third or fourth rail components (or another rail component) may interfere with a socket, with the elevated platform, or the like, to limit downward movement of the rail support system.

As another example, the safety rail support system may include, or may be operably coupled with, one or more motors (e.g., linear motors) that may operate to cause the cam to travel in the first linear direction 208 to allow the guide pin to move out of the first locked position recess. As one example, a first motor may be coupled with the first cam 118 and a second motor may be coupled with the second cam of the second rail support assembly 150 (shown in Figure 3). Alternatively, one or more motors may be arranged in some other configuration to control the movement of the safety rail support system.

In another example, the safety rail support system may include one or more magnetics or magnetic devices 149 (shown in Figure 6). The magnetic devices may encourage movement of the cam. For example, the rail support assembly may include magnetics arranged in various positions relative to the cam to encourage movement of the cam (e.g., toward or away from the first and/or second linear directions 208, 210, in the CCW direction 212, in a clockwise direction, etc.). In the illustrated embodiment of Figure 6, the magnetic devices are disposed at the second end 182 of the cam, and are positioned in order to align the cam in a position as seen in the first view 802 shown in Figure 9. For example, the magnetic devices may encourage the cam to move toward a starting path of the travel path recesses when the cam moves from the unloaded position into the loaded position. In another example, a first magnet may be coupled with the mounting bracket and/or one or more guide pins, and a second magnet may be coupled with the cam. The first and second magnets may be arranged to move toward or away from each other, thereby encouraging movement of the cam relative to the mounting bracket. The magnetic devices may be arranged to encourage the cam to move toward the first locked position recess, to encourage the cam to move out of and/or away from the first locked position recess, to control a speed of rotation of the cam in the CCW direction and/or clockwise direction about the first axis, to control a speed of movement of the cam in the first linear direction and/or the second linear direction, or the like.

Returning to Figure 9, responsive to the guide pin reaching the point G of the travel path recesses, the cam may continue to rotate CCW about the first axis and move in the second linear direction 210 to move the third rail component toward the unloaded position. For example, while the cam rotates CCW about the axis from about 135° to about 180°, a fourth view 808 illustrates the cam moving relative to the position of the guide pin such that the guide pin moves within the recesses from the point G, to a point H, and to a point I. Responsive to the guide pin reaching the point I, the cam and the rail support assembly (including the first and third rail components) may continue to move in the second linear direction 210 and the guide pin may move out of the recesses. For example, the guide pin may disengage with the cam and allow the cam to move in the second linear direction 210. In one example, the cam may move in the second linear direction until the rail support system reaches a stop feature, until one or more rail components reaches an interfering feature of the support structure, until the first and/or second rail components reach the ground surface 108, or the like.

In one or more examples, to move the third rail component from the unloaded position to the loaded position (shown in Figures 1 and 2), the cam may move in the first linear direction 208 until the guide pin engages with the recesses of the cam. For example, a fifth view 810 illustrates the guide pin engaging with the cam and extending into the recesses at the point I, and then causing the cam to rotate as the position of the guide pin moves from the point I, to a point J, and to a point K while the cam rotates in the CCW direction from about 180° to about 225°. In the illustrated example, the fifth view 810 (e.g., about 180° to about 225° about the first axis) is substantially the same as the first view 802 (e.g., about 0° to about 45° about the first axis) in which the guide pin extends into and engages with the recesses of the cam. For example, the recesses of a first half of a circumference of the cam may be substantially the same as the recesses of a second half of the circumference of the cam. The arrangement of the recesses from about 0° to about 180° about the circumference of the exterior surface of the cam is substantially the same as the arrangement of the recesses from about 180° to about 360° about the circumference of the exterior surface of the cam. For example, the recesses may be arranged about the circumference such that a pattern of the recesses along the first half of the circumference of the cam may be about the same as a pattern of the recesses along the second half of the circumference of the cam. Optionally, the cam may include a pattern of three recesses that are disposed about the circumference of the cam. For example, each of the three recesses may be disposed within about a third of the circumference of the cam.

Additionally, the rail support assembly may include a number guide pins that corresponds to a number of recesses. As one example in which the cam includes two arrangements of recesses, such as an arrangement of recesses from about 0° to about 180° and another arrangement of recesses from about 180° to about 360°, the rail support assembly may include two guide pins to control movement of the cam. In another example in which the cam includes three arrangements of recesses (a first arrangement from about 0° to about 120°, a second arrangement from about 120° to about 240°, and a third arrangement from about 240° to about 360°), the rail support assembly may include three guide pins to control movement of the cam.

Additionally, the cam may include at least two first locked position recesses. For example, the first guide pin 134A may be move into one of the first locked position recesses 202 and the second guide pin 134B may move into another of the first locked position recesses (not shown) while the cam rotates from about 90° to about 135°. In another example, the cam may include a number of locked position recesses that corresponds to a number of recess arrangements about the circumference of the cam. In another example, the cam may include a number of locked position recesses that is less than the number of recess arrangements about the circumference of the cam.

In one or more examples, while the cam is unlocked state or unloaded position, the operator may directly or indirectly push the rail components in the first linear direction 208 (e.g., lift the rail components) away from the ground surface, and subsequently lower the rail components in the second linear direction 210 until the guide pin(s) are received and locked in the locked position recess. The cam may remain in the locked state until the operator pushes the rail components again in the first linear direction 208 away from the ground surface to move the guide pins out of the first locked position recesses. Subsequent to the guide pins moving out of the first locked position recesses, the operator may allow the rail components to move in the second linear direction 210 toward the ground surface toward the unloaded position. In order to lift and lower the rail components, the operator may manually move one of the rail components, the operator may use the tool 143 to move one of the rail components, the operator may use the tool to engage the engagement component 124 of the rail system, or the like.

In one or more examples, the safety rail support system may include a secondary lock feature. For example, movement of the rail system may only be allowed subsequent to the release of the guide pins from the locked position recesses of the cam and the release of a secondary locking mechanism. In one example, if one of i) the guide pins are not moved out of the locked position recesses, or ii) the secondary locking mechanism is not released, then movement of the cam and the rail support system may be prohibited. In another example, if the guide pins are moved out of the locked position recesses but the secondary locking mechanism is not released, then movement of the cam and rail support system may be prohibited. In another example, if the guide pins are moved out of the locked position recesses and the secondary locking mechanism is released, then movement of the cam and the rail support system may be allowed.

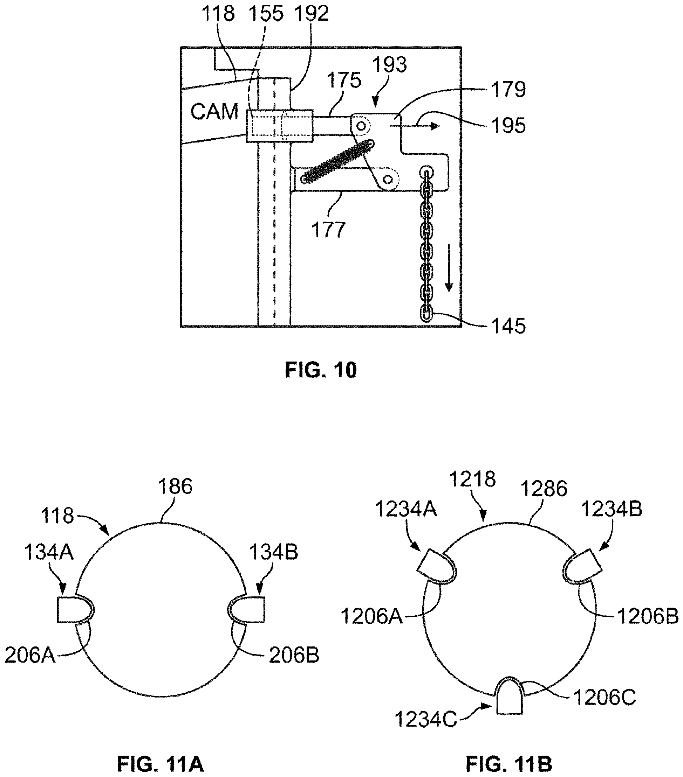

Figure 10 illustrates a cross-sectional view of one example of a secondary lock assembly 193. The secondary lock assembly includes a mounting fixture 177 that is coupled with the sleeve portion 192 of the mounting bracket (shown in Figure 4), a lock hinge 179 that is coupled with the mounting fixture, a secondary lock pin 175 that is coupled with the lock hinge and extends into a secondary lock engagement recess 155 of the mounting bracket 190A. The secondary lock engagement recess (also shown in Figure 4) allows access of the secondary lock pin 175 to the plural recesses of the cam 118. While the secondary lock pin 175 is engaged with the plural recesses of the cam, the cam may be prohibited from moving. The secondary lock assembly also includes a release mechanism 145, which may be a chain, a rope, a rod, or the like, that extends away from the secondary lock assembly.

While the safety rail support system is in the loaded position (shown in Figure 2), an operator standing on the ground surface 108 (shown in Figure 1) may move or pull the release mechanism 145 to move the secondary lock pin 175 in a direction 195 out of the secondary lock engagement recess 155 to allow movement of the cam. For example, the operator may move the secondary lock pin out of the secondary lock engagement recess, and may subsequently use the tool 143 to move the safety rail support assembly in the first linear direction 208 to move the guide pins out of the locked position recesses. The operator may be unable to move the safety rail support assembly in the first linear direction 208 until the secondary lock pin has been removed from the secondary lock engagement recess. While Figure 10 illustrates one example of a secondary lock assembly, the safety rail support assembly may include any alternative secondary lock assembly or system having any alternative arrangement, components, or the like. As one example, the secondary lock assembly may be a motor device that may be controlled by a key, a key code, or the like. As another example, the secondary lock assembly may be a bracket, a clamp, or the like, that may prohibit movement of the rail components.

In one example, the safety rail support system may include the first rail support assembly 110 and the second rail support assembly 150, illustrated in Figures 1-3. The second rail support assembly may be the same as, or substantially similar to, the first rail support assembly illustrated in Figures 4-8. For example, the second rail support assembly may include a second support rod, a second cam, a second mounting bracket, and the second rail component 152. The second cam may have recesses (not shown) that have the same or a similar arrangement as the recesses of the first cam 118. For example, the second cam may include second exterior surfaces with plural second recesses that extend from the second exterior surfaces and toward a second interior passage of the second cam. The second rail support assembly may also include a second set of guide pins that may extend into the second recesses of the second cam and may control movement of the second cam.

In one example, the first cam may be the same as the second cam. For example, the first rail support assembly may include the first cam, and the second rail support assembly may also include the first cam. The plural first recesses of the first cam may be substantially the same as the plural second recesses of the second cam. For example, an arrangement of the plural first recesses (e.g., shape, size, configuration, orientation, placement relative to the first and second ends of the cams, etc.) may be the same or substantially the same as an arrangement of the plural second recesses.

In one example, the first cam 118 includes the first locked position recess (shown in Figure 9) and the second cam 158 includes a second locked position recess. The first cam may be prohibited from rotating responsive to at least one guide pin of a first set of guide pins moving into the first locked position recess of the first cam, and the second cam may be prohibited from rotating responsive to at least one guide pin of a second set of guide pins moving into the second locked position recess of the second cam. For example, the third rail component may be disposed in the loaded position while at least one of the first set of guide pins is disposed in the first locked position recess of the first cam, and the while at least one of the second set of guide pins is disposed in the second locked position recess of the second cam. Additionally, the first and second cams may be allowed to rotate (e.g., in the CCW direction 212) while the first and second sets of guide pins are disposed in the travel path recesses of the first and second cams, respectively. In another example, the recesses of the cams may be arranged such that cams may rotate in a clockwise direction.

In the illustrated embodiments, the first rail support assembly includes a first set of guide pins that includes two guide pins. Optionally, one or both of the first or second rail support assemblies may include a single guide pin, or more than two guide pins. The number of guide pins may be based on a configuration of the recesses of the cam, a size of the cam, a degree of rotation the cam is allowed to rotate about the axis, or the like. In one example, a rail support assembly may include a cam that has two or more travel path recesses, and the number of guide pins may be based on the number of travel path recesses of the cam. For example, Figure 11A illustrates a cross-sectional top view of the first cam of the first rail support assembly. In the illustrated embodiment, the two guide pins 134A, 134B extend into the recesses 206A, 206B, respectively, of the first cam to control the movement of the first cam 118. For example, the first cam includes two travel path recesses and two locked position recesses into which the two guide pins extend. Alternatively, Figure 11B illustrates a cross-sectional top view of a cam 1218 in accordance with another embodiment. The cam 1218 may include three recesses 1206A, 1206B, 1206C disposed about a perimeter 1286 of the cam, into which three guide pins 1234A, 1234B, 1234C may extend, respectively. Each of the three recesses may include a travel path recess and a locked position recess. The three guide pins 1234A, 1234B, 1234C may be used to control the movement of the cam 1218. In another example, the cams may include more than three recess arrangements disposed about the circumference of the cam.

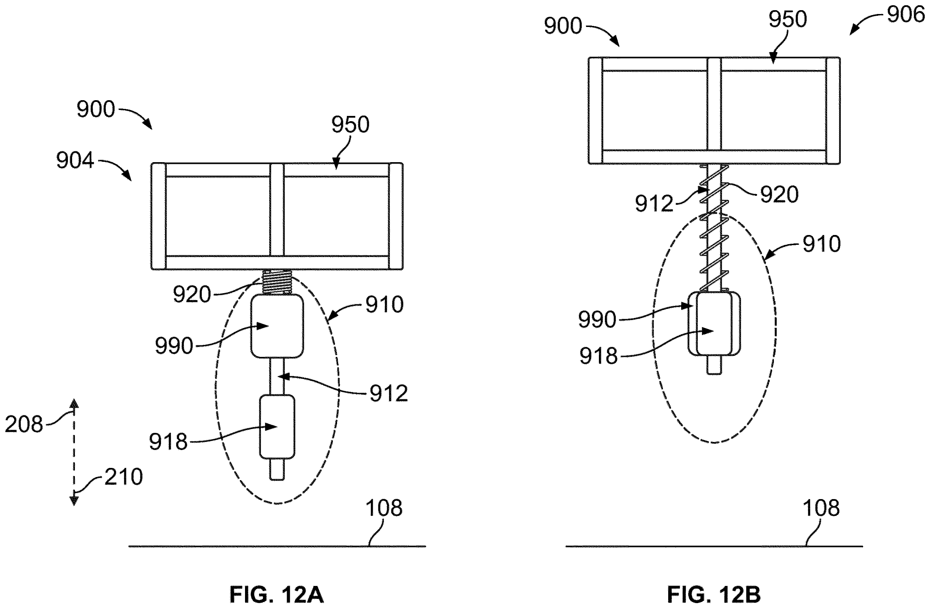

Figure 12A illustrates a safety rail support system 900 in an unloaded position 904, according to an example of the present disclosure. Figure 12B illustrates the safety rail support system 900 shown in Figure 12A in a loaded position 906, according to an example of the present disclosure. The safety rail support system 900 includes a rail support assembly 910 having a support rod (not shown), a first rail component 912, a mounting bracket 990, and a cam 918. The rail support assembly is arranged to move a second rail component 950 in the first and second linear directions 208, 210, respectively, between the unloaded position 904 and the loaded position 906. Like the rail support system 100 shown in Figures 1 and 2, the safety rail support system is in the unloaded position 904 while the system is disposed at a first position relative to the surface 108, and the safety rail support system is in the loaded position 906 while the system is disposed at a second position relative to the surface 108 that is different than the first position. For example, the safety rail support system is disposed further away from the ground surface while the safety rail system is in the loaded position.

In the illustrated example, the system includes the first rail component 912 that extends substantially vertically and is coupled with the second rail component to move the second rail component between the loaded and unloaded positions. In alternative examples, the system may include any number of vertically extending rail components, that may be coupled with any number of substantially horizontally extending other rail components. In alternative examples, the system may include rail components operably coupled with each other in alternative angled arrangements (e.g., non-right angled or non-90° arrangements).

The rail support assembly may also include a spring 920. In the illustrated example, the spring is disposed between the mounting bracket and the second rail component, and extends around the first rail component. Additionally or alternatively, one or more springs may be disposed in an alternative position. The spring(s) may be used to encourage movement of the safety rail support system towards one of the loaded position or the unloaded position. For example, the spring(s) may be shaped, sized, and/or arranged to reduce an amount of effort needed for an operator to move the safety rail support system between the loaded and unloaded positions. The spring(s) may assist the operator by taking weight off of the rail components, making it easier for the operator to raise and lower the rail components. As another example, the spring(s) may be shaped, sized, and/or arranged to control a speed of movement of the safety rail support system in the first and/or second linear directions. As another example, the spring(s) may be shaped, sized, and/or arrangement to control a speed of rotation of the cam and/or a direction of rotation of the cam (e.g., in the clockwise direction and/or counterclockwise direction).

As another example, the spring(s) may be designed based on weight limitations, lifting requirements, safety standards and/or regulations, or the like. For example, a safety standard regulation may indicate that the amount of weight the operator is required to lift and/or move cannot exceed 30 pounds, but the rail components may weigh about 50 pounds. The spring(s) may be designed to reduce the amount of weight the operator is required to move in order for the operator to adhere to the safety standard regulation.

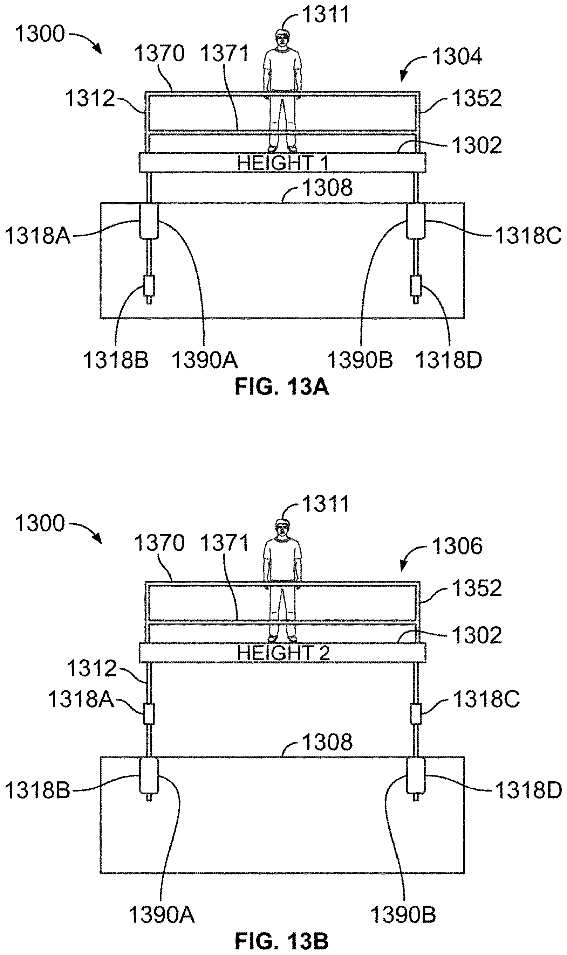

Figures 13A and 13B illustrate an alternative use for a rail or cam locking system 1300. Figure 13A illustrates the cam locking system 1300 in an unloaded state or unloaded position 1304, according to an example of the present disclosure. Figure 13B illustrates the cam locking system 1300 in a loaded state or loaded position 1306. The cam locking system 1300 includes a work platform 1302 that moves between a lowered height (shown in Figure 13A) and a raised or elevated height (shown in Figure 13B). The cam locking system includes first and second rail components 1312, 1352 that extend substantially vertically, and third and fourth rail components 1370, 1371 that extend substantially horizontally and are coupled with the first and second rail components. The first rail component is coupled with first and second cams 1318A, 1318B, that move into and out of a first mounting bracket 1390A, respectively, based on the system being in the unloaded position or the loaded position. Additionally, the second rail component is coupled with third and fourth cams 1318C, 1318D, that move into and out of a second mounting bracket 1390B, respectively, based on the system being in the unloaded or loaded positions. For example, while the system 1300 is in the unloaded position, the first cam 1318A is coupled with the first mounting bracket 1390A and the third cam 1318C is coupled with the second mounting bracket 1390B. Alternatively, while the system 1300 is in the loaded position, the second cam 1318B is coupled with the first mounting bracket 1390A and the fourth cam 1318D is coupled with the second mounting bracket 1390B.

The work platform 1302 is coupled with the first and second rail components. In the illustrated example, the platform moves vertically with the cam locking system. While the work platform 1302 is at a lowered height, the cams 1318A, 1318C are loaded into the mounting brackets 1390A, 1390B. Alternatively, while the work platform 1302 is at the elevated or raised height, the cams 1318B, 1318D are loaded into the mounting brackets 1390A, 1390B, respectively. For example, the movement of cam locking system between the loaded and unloaded positions moves the work platform 1302 and the third and fourth rail components towards and away from a surface 1308. For example, the rail components are in a fixed position relative to the work platform, and movement of the work platform causes movement of the rail components. The surface 1308 may be a ground surface, may be another platform or elevated surface, or the like. An operator 1311 positioned on the platform 1302 may move vertically up and down with the movement of the system between the loaded and unloaded positions.

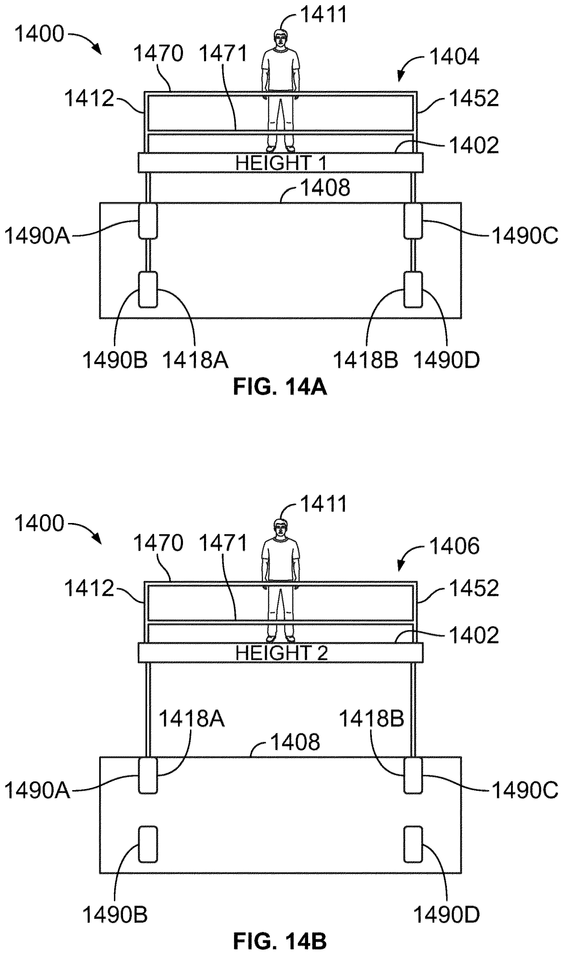

Figures 14A and 14B illustrate another alternative use for a cam locking system 1400. Figure 14A illustrates the cam locking system 1400 in an unloaded position 1404, according to an example of the present disclosure. Figure 14B illustrates the cam locking system 1400 in a loaded position 1406. Like the system 1300 shown in Figures 13A, 13B, a work platform 1402 of the cam locking system 1400 moves with the rail components 1412, 1452, 1470, 1471 towards and away from a surface 1408. An operator 1411 positioned on the work platform 1402 may move vertically with the movement of the system between the loaded and unloaded positions.

The cam locking system 1400 also includes a first cam 1418A that is coupled with the first rail component 1412, and a second cam 1418B that is coupled with the second rail component 1452. While the system 1400 is in the unloaded position (e.g., the work platform is at the lowered position, as shown in Figure 14A), the first cam 1418A is loaded into a first mounting bracket 1490B and the second cam 1418B is loaded into a second mounting bracket 1490D. While the system 1400 is in the loaded position (e.g., the work platform is at the elevated or raised position, as shown in Figure 14B), the first cam 1418A is loaded into a third mounting bracket 1490A, and the second cam 1418B is loaded into a fourth mounting bracket 1490C. The work platform 1402 moves between the lowered position and the elevated or raised position. Additionally, the rail components are in a fixed position relative to the work platform, and movement of the work platform causes movement of the rail components.

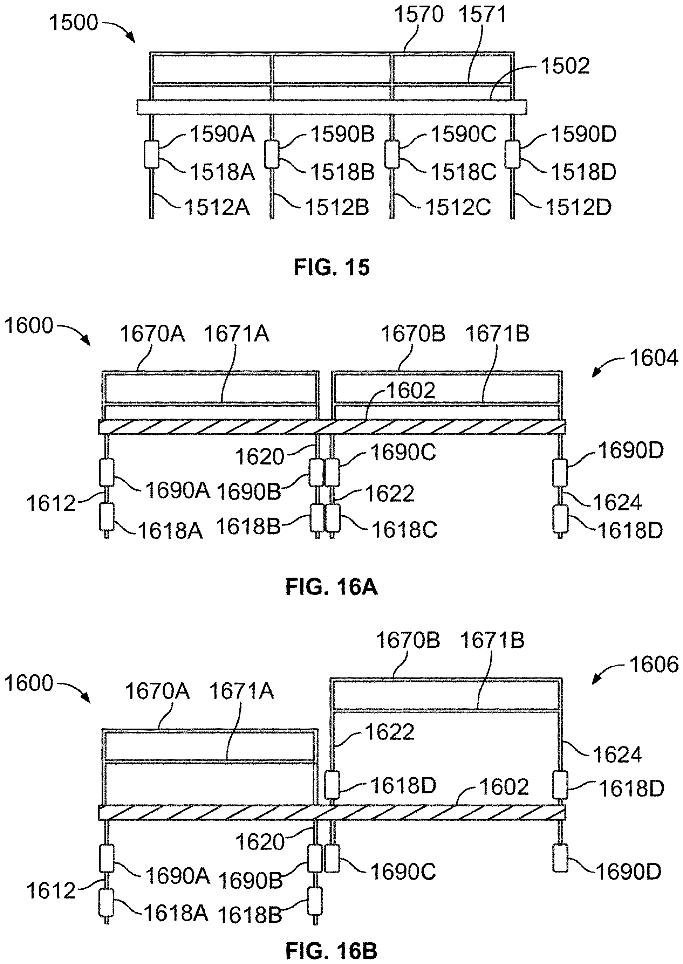

Figure 15 illustrates a safety rail support system 1500, according to an example of the present disclosure. In the illustrated example, the system 1500 includes plural vertically-extending rail components 1512A-1512D, and the same plural number of cam 1518A-1518D and mounting brackets 1590A-D. In alternatively examples, the system may include fewer cams and mounting brackets than the number of vertically-extending rail components. In another example, one or more vertically-extending rail components may include two or more cams coupled thereto.

The plural vertically-extending first rail components are coupled with one or more horizontally-extending rail components 1570, 1571. In one example, the vertically-extending first rail components may move the horizontally-extending rail components towards or away from a platform 1502. In another example, the vertically-extending first rail components may move the horizontally-extending rail components and the platform 1502 between different vertical positions.

Figure 16A illustrates a safety rail support system 1600 in an unloaded position 1604, according to an example of the present disclosure. Figure 16B illustrates the safety rail support system 1600 in a first loaded position 1606, according to an example of the present disclosure. The system 1600 includes a first cam 1618A and a first mounting bracket 1690A that are coupled with a first rail component 1612, a second cam 1618B and a second mounting bracket 1690B that are coupled with a second rail component 1620, a third cam 1618C and a third mounting bracket 1690C that are coupled with a third rail component 1622, and a fourth cam 1618D and a fourth mounting bracket 1690D that are coupled with a fourth rail component 1624. The system also includes a first set 1670A, 1671A of horizontally-extending rail components that are coupled with the first and second rail components 1612, 1620, and a second set 1670B, 1671B of horizontally-extending rail components that are coupled with the third and fourth rail components 1622, 1624.

The system may be in the unloaded state while all of the horizontally-extending rail components 1670A, 1671A, 1670B, 1671B are disposed proximate to the platform (shown in Figure 16A) and the cams 1618A-D are positioned outside of the corresponding mounting brackets. The system may be in a first loaded state while the first set of horizontally-extending rail components 1670A, 1671A are in the unloaded state (e.g., disposed closer to the platform relative to the second set of horizontally-extending rail components 1670B, 1671B) and the second set of horizontally-extending rail components 1670B, 1671B are in the loaded state (shown in Figure 16B). For example, in the first loaded state, the first and second cams are positioned outside of the first and second mounting brackets, and the third and fourth cams are positioned inside of the third and fourth mounting brackets. The system may be a second loaded state while all of the horizontally-extending rail components 1670A, 1671A, 1670B, 1671B are in the loaded state and have been moved away from the platform (not shown). For example, in the second loaded state, the first, second, third, and fourth cams may be positioned inside of the corresponding mounting brackets.

In one or more examples, the system may be arranged, or have one or more features, that controls the order in which the rails components 1670A, 1671A, 1670B, 1671B are moved between the loaded and unloaded positions. For example, the rail components 1670B, 1671B may be required to be moved from the unloaded position to the loaded position before the other rail components 1670A, 1671A are allowed to move from the unloaded position to the loaded position, or vice versa. As an example, the system may include a locking mechanism (not shown) that moves between a locked state and an unlocked state based on the position of the rail components 1670B, 1671B, such that the locking mechanism may allow or prevent movement of the other rail components 1670A, 1671A based on the position of the rail components 1670B, 1671B.

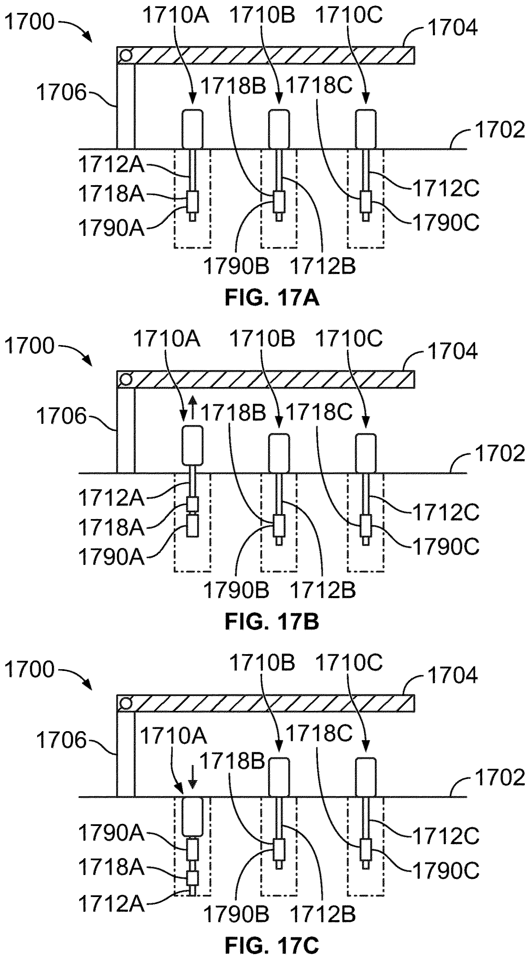

Figure 17A illustrates a cam locking system 1700 in a first state, according to an example of the present disclosure. Figure 17B illustrates the cam locking system 1700 in a second state. Figure 17C illustrates the cam locking system 1700 in a third state. In the illustrated example, the cam locking system includes plural cam assemblies 1710A, 1710B, 1710C that may be raised and lowered, such as to allow a vehicle to move past the cam assemblies 1710A-C and through a gate system having a first component 1704 that extends horizontally away from a second component 1706. The first cam assembly 1710A includes a first cam 1718A coupled with a first rail 1712A that is loaded into a first mounting bracket 1790A, the second cam assembly 1710B includes a second cam 1718B coupled with a second rail 1712B that is loaded into a second mounting bracket 1790B, and the third cam assembly 1710C includes a third cam 1718C coupled with a third rail 1712C that is loaded into a third mounting bracket 1790C. The first, second, and third cams may include plural recesses into which guide pins (not shown) may move between travel path recesses and locked position recesses to move the cam assemblies between loaded positions (e.g., where access through the gate system is blocked) and unloaded positions (e.g., where access through the gate system is allowed). For example, the cam assemblies may be in the loaded positions while the cam assemblies extend above a ground surface 1702, and the cam assemblies may be in the unloaded positions while the cam assemblies are disposed below the ground surface 1702.

In one example, each of the cam assemblies 1710A-C may be controlled independent of each other cam assembly. In another example, two or more of the cam assemblies may be controlled together, such as by an operator pushing a button that may initiate operation of one or more motors (not shown) attached to one or more of the cam assemblies. For example, an operator may activate movement of a motor that is operably coupled with one or more of the cam assemblies, to control movement of the one or more cam assemblies between the loaded and unloaded positions.

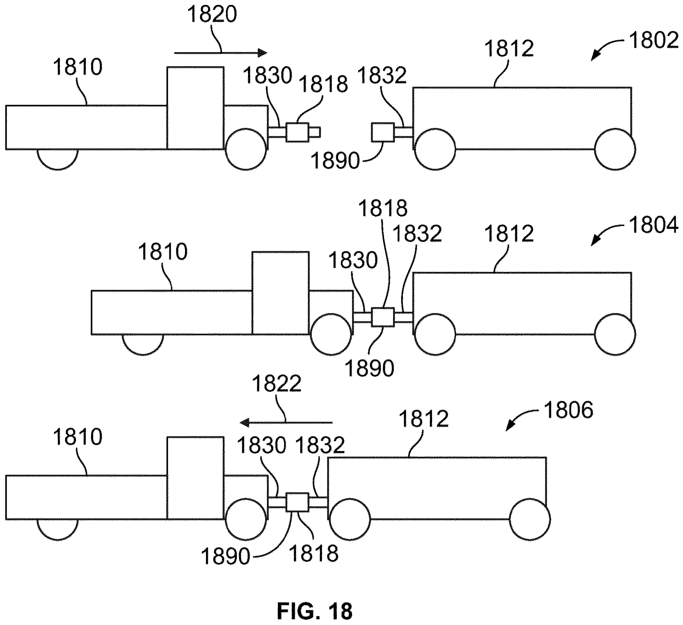

Figure 18 illustrates a cam locking system 1800 in plural different states, according to an example of the present disclosure. The system 1800 includes a first vehicle 1810 that has a first rail component 1830 extending from one end of the first vehicle, and a cam 1818 that is coupled with the first rail component. The system 1800 also includes a second vehicle 1812 that includes a second rail component 1832 extending from one end of the second vehicle, and a mounting bracket 1890 that is coupled with the second rail component. The first vehicle may be a propulsion-generating vehicle, and the second vehicle may be a non-propulsion-generating vehicle (e.g., a trailer, a cart, a buggy, or the like). The first rail component extends away from the first vehicle in a direction toward the second vehicle, and the second rail component extends away from the second vehicle in a direction toward the first vehicle.

In a first state 1802, the first vehicle is separated from the second vehicle. The first vehicle may move in a first direction 1820 towards the second vehicle. In a second state 1804, the cam 1818 that is coupled with the first vehicle engages with the mounting bracket 1890 that is coupled with the second vehicle. For example, the mounting bracket may include guide pins (not shown) that may move into the plural recesses of the cam, and may move into locked position recesses of the cam. In a third state 1806, while the guide pins are disposed in the locked position recesses of the cam 1818, the first vehicle may move in a second direction 1822 and may move the second vehicle with movement of the first vehicle. To disconnect the cam 1818 from the mounting bracket 1890, the first vehicle may move in the first direction 1820 to move the guide pins out of the locked position recesses, and may subsequently move in the second direction 1822 to move the guide pins into the travel path recesses of the cam 1818 until the guide pins move out of the travel path recesses of the cam.

Further, the disclosure comprises examples according to the following clauses:
Clause 1: a cam locking assembly comprising:
   a support rod having a rod body that extends between a first end and s second end of the support rod along an axis;
   a first rail component having a first rail body that extends between a third end and a fourth end of the first rail component along the axis, the third end of the first rail component configured to be operably coupled with the second end of the support rod, the fourth end of the first rail component configured to be operably coupled with a third rail component;
   a cam having one or more interior surfaces defining an interior passage extending along the axis, wherein at least a portion of the support rod is configured to be disposed within the interior passage of the cam, the cam including an exterior surface having plural recesses extending from the exterior surface toward the interior passage; and
   one or more guide pins configured to extend into the plural recesses of the cam, the one or more guide pins configured to control movement of the cam,
   wherein movement of the cam is configured to control movement of the third rail component between a loaded position and an unloaded position.
Clause 2: the cam locking assembly of clause 1, wherein the support rod, the first rail component, and the cam are concentric with each other about the axis.
Clause 3: the cam locking assembly of clauses 1 or 2, wherein the cam is configured to move in a first linear direction to move the third rail component into the loaded position (e.g., a locked position), and the cam is configured to move in a second linear direction to move the third rail component into the unloaded position (e.g., an unlocked position).
Clause 4: the cam locking assembly of clauses 1-3, wherein the plural recesses include a locked position recess and a travel path recess, wherein the cam is prohibited from rotating responsive to the one or more guide pins being disposed in the locked position recess. Optionally, the rail support assembly may include a secondary lock feature. The cam may be prohibited from rotating responsive to one or both of i) the guide pin(s) being disposed in the locked position recess and/or ii) the secondary lock feature being engaged. The cam may be allowed to rotate responsive to both of i) the guide pin(s) moving out of the locked position recess and ii) the second lock feature being disengaged. The secondary lock feature may prevent accidental movement of the guide pin(s) out of the locked position recess, accidental movement of the cam, etc.
Clause 5: the cam locking assembly of clauses 1 or 4, wherein the third rail component is configured to be disposed in the loaded position while the one or more guide pins are disposed in the locked position recess.
Clause 6: the cam locking assembly of clauses 1 or 4, wherein the cam is allowed to rotate while the one or more guide pins are disposed in the travel path recess.
Clause 7: the cam locking assembly of clauses 1-6, further comprising a mounting bracket including one or more surfaces defining a passage configured to receive at least a portion of the support rod, the mounting bracket configured to be coupled with a support structure of an elevated platform.
Clause 8: the cam locking assembly of clauses 1-7, further comprising one or more magnetic devices configured to encourage movement of the cam in one or more directions.
Clause 9: the cam locking assembly of clauses 1-8, wherein movement of the cam is configured to be activated by an operator.
Clause 10: a safety rail support system configured to be operably coupled with an elevated platform, the safety rail support system comprising:
   a first cam locking assembly comprising:
      a first support rod having a first rod body that extends between a first end and s second end along a first axis;
      a first rail component having a first rail body that extends between a third end and a fourth end along the first axis, the third end of the first rail component configured to be operably coupled with the second end of the support rod, the fourth end of the first rail component configured to be operably coupled with a third rail component;
      a first cam having one or more interior surfaces defining a first interior passage extending along the first axis, wherein a portion of the first support rod is configured to be disposed within the first interior passage of the cam, the first cam including a first exterior surface having plural first recesses extending from the first exterior surface toward the first interior passage; and
      a first set of guide pins configured to extend into the plural first recesses of the first cam, the first set of guide pins configured to control movement of the first cam; and
   a second cam locking assembly comprising:
      a second support rod having a second rod body that extends between a fifth end and a sixth end of the second support rod along a second axis;
      a second rail component having a second rail body that extends between a seventh end and an eighth end of the second rail component along the second axis, the seventh end of the second rail component configured to be operably coupled with sixth end of the second support rod, the eighth end of the second rail component configured to be operably coupled with the third rail component;
      a second cam having one or more interior surfaces defining a second interior passage extending along the second axis, wherein at least a portion of the second support rod is configured to be disposed within the second interior passage, the second cam including a second exterior surface having plural second recesses extending from the second exterior surface toward the second interior passage; and
      a second set of guide pins configured to extend into the plural second recesses of the second cam, the second set of guide pins configured to control movement of the second cam,
      wherein movement of the first cam and movement of the second cam is configured to control movement of the third rail component between a loaded position and an unloaded position, and
      wherein the third rail component in the loaded position is configured to block access onto or off the elevated platform, and the third rail component in the unloaded position is configured to allow access onto or off of the elevated platform.
Clause 11: the safety rail support system of clause 10, wherein movement of the first cam and movement of the second cam is configured to be activated by an operator.
Clause 12: the safety rail support system of clauses 10 or 11, wherein the plural first recesses of the first cam includes first locked position recesses and first travel path recesses, and the plural second recesses of the second cam includes second locked position recesses and second travel path recesses.
Clause 13: the safety rail support system of clauses 10 or 12, wherein first cam is prohibited from rotating responsive to the first set of guide pins moving into the first lock position recesses, and the second cam is prohibited from rotating responsive to the second set of guide pins moving into the second locked position recesses.
Clause 14: the safety rail support system of clauses 10 or 12, wherein the third rail component is configured to be in the loaded position while the first set of guide pins are disposed in the first locked position recesses and the second set of guide pins are disposed in the second locked position recesses.
Clause 15: the safety rail support system of clauses 10 or 12, wherein the first and second cams are allowed to rotate while the first set of guide pins are disposed in the first travel path recesses and the second set of guide pins are disposed in the second travel path recesses.
Clause 16: the safety rail support system of clauses 10-15, further comprising:
   a first mounting bracket configured to be operably coupled with a support structure of the elevated platform at a first location, the first mounting bracket including a first passage configured to receive a portion of the first support rod and a portion of the first rail component; and
   a second mounting bracket configured to be operably coupled with the support structure of the elevated platform at a second location, the second mounting bracket including a second passage configured to receive a portion of the second support rod and a portion of the second rail component.
Clause 17: the safety rail support system of clauses 10-16, further comprising one or more motors configured to activate movement of the first cam and movement of the second cam to control movement of the third rail component between the loaded position and the unloaded position.
Clause 18: the safety rail support system of clauses 10-17, wherein the first support rod, the first rail component, and the first cam are concentric with each other about the first axis, and the second support rod, the second rail component, and the second cam are concentric with each other about the second axis.
Clause 19: the safety rail support system of clauses 10-18, further comprising one or more of a magnetic device or a spring, wherein the one or more of the magnetic device or the spring are configured to encourage movement of the first cam and the second cam in one or more directions. Optionally, the magnetic device or the spring may encourage movement of the cam (e.g., rotational movement, linear movement, or a combination of rotational and linear movement).
Clause 20: a method comprising:
   moving a first rail component of a cam locking assembly into a loaded position, the cam locking assembly including a cam and a second rail component configured to be disposed between the cam and the first rail component, the cam locking assembly configured to be operably coupled with an elevated and/or non-elevated platform, wherein the cam is configured to move in a first linear direction to move the first rail component into the loaded position, wherein the first rail component in the loaded position is configured to block access onto or off of the elevated platform; and
   moving the first rail component into an unloaded position, wherein the cam is configured to move in a second linear direction to move the first rail component into the unloaded position, wherein the first rail component in the unloaded position is configured to allow access onto or off of the elevated platform.

As described herein, examples of the present disclosure provide systems and methods for moving safety rail systems between loaded positions and unloaded positions, such as to provide safety to operators standing on an elevated platform, to allow movement of items (e.g., equipment, systems, or the like) over the stationary platform, to allow movement of the elevated platform from one location to another without interfering with a structure (e.g., an airplane or any other structure).

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A cam locking assembly (110) comprising:
a support rod (116) having a rod body that extends between a first end (130) and a second end (132) along an axis (114);
a first rail (112) component having a first rail body that extends between a third end (120) and a fourth end (122) along the axis (114), the third end (120) of the first rail component (112) configured to be operably coupled with the second end (132) of the support rod (116), the fourth end (122) of the first rail component (112) configured to be operably coupled with a third rail component (170);
a cam (118) having one or more interior surfaces (184) defining an interior passage (178) extending along the axis (114), wherein at least a portion of the support rod (116) is configured to be disposed within the interior passage (178) of the cam (118), the cam (118) including an exterior surface (186) having plural recesses (202, 206) extending from the exterior surface (186) toward the interior passage (184); and
one or more guide pins (134A, 134B) configured to extend into the plural recesses (202, 206) of the cam (118), the one or more guide pins (134A, 134B) configured to control movement of cam (118),
wherein movement of the cam (118) is configured to control movement of the third rail component (170) between a loaded position (106) and an unloaded position (104).

2. The cam locking assembly (110) of claim 1, wherein the support rod (116), the first rail component (112), and the cam (118) are concentric with each other about the axis (114).

3. The cam locking assembly (110) of claim 1 or 2, wherein the cam (118) is configured to move in a first linear direction (208) to move the third rail component (170) into the loaded position (106), and the cam (118) is configured to move in a second linear direction (210) to move the third rail component (170) into the unloaded position (104).

4. The cam locking assembly (110) of any preceding claim, wherein the plural recesses (202, 206) include a locked position recess (202) and a travel path recess (206), wherein the cam (118) is prohibited from rotating responsive to the one or more guide pins (134A, 134B) being disposed in the locked position recess (202).

5. The cam locking assembly (110) of claim 4, wherein the third rail component (170) is configured to be disposed in the loaded position (106) while the one or more guide pins (134A, 134B) are disposed in the locked position recess (202); or wherein the cam (118) is allowed to rotate while the one or more guide pins (134A, 134B) are disposed in the travel path recess (206).

6. The cam locking assembly (110) of any preceding claim, further comprising a mounting bracket (190A) including one or more surfaces defining a passage configured to receive at least a portion of the support rod (116), the mounting bracket (190) configured to be coupled with a support structure (126) of an elevated platform (102).

7. The cam locking assembly (110) of any preceding claim, further comprising one or more magnetic devices (149) configured to encourage movement of the cam (118) in one or more directions; and/or
wherein movement of the cam (118) is configured to be activated by an operator (111).

8. A safety rail support system (100) configured to be operably coupled with an elevated platform, the safety rail support system comprising:
a first cam locking assembly (110) comprising:
a first support rod (116) having a first rod body that extends between a first end (130) and a second end (132) along a first axis (114);
a first rail component (112) having a first rail body that extends between a third end (120) and a fourth end (122) along the first axis (114), the third end (120) of the first rail component (112) configured to be operably coupled with the second end (132) of the first support rod (116), the fourth end (122) of the first rail component (112) configured to be operably coupled with a third rail component (170);
a first cam (118) having one or more interior surfaces (184) defining a first interior passage (178) extending along the first axis (114), wherein a portion of the first support rod (116) is configured to be disposed within the first interior passage (178), the first cam (118) including a first exterior surface (186) having plural first recesses (202, 206) extending from the first exterior surface (186) toward the first interior passage (178); and
a first set of guide pins (134A, 134B) configured to extend into the plural first recesses (202, 206) of the first cam (118), the first set of guide pins (134A, 134B) configured to control movement of the first cam (118); and
a second cam locking assembly (150) comprising:
a second support rod (156) having a second rod body that extends between a fifth end and a sixth end along a second axis (154);
a second rail component (152) having a second rail body that extends between a seventh end (160) and an eighth end (162) along the second axis (154), the seventh end (160) of the second rail component (152) configured to be operably coupled with the sixth end of the second support rod (156), the eighth end (162) of the second rail component (152) configured to be operably coupled with the third rail component (170);
a second cam (158) having one or more interior surfaces defining a second interior passage extending along the second axis (154), wherein a portion of the second support rod (156) is configured to be disposed within the second interior passage, the second cam (158) including a second exterior surface having plural second recesses extending from the second exterior surface toward the second interior passage; and
a second set of guide pins configured to extend into the plural second recesses of the second cam (158), the second set of guide pins configured to control movement of the second cam (158),
wherein movement of the first cam (118) and movement of the second cam (158) is configured to control movement of the third rail component (170) between a loaded position (106) and an unloaded position (104), and
wherein the third rail component (170) in the loaded position (106) is configured to block access onto or off of the elevated platform (102), and the third rail component (170) in the unloaded position (104) is configured to allow access onto or off of the elevated platform (102).

9. The safety rail support system (100) of claim 8, wherein movement of the first cam (118) and movement of the second cam (158) is configured to be activated by an operator (111).

10. The safety rail support system (100) of claim 8 or 9, wherein the plural first recesses (202, 206) of the first cam (118) includes first locked position recesses (202) and first travel path recesses (206), and the plural second recesses of the second cam includes second locked position recesses and second travel path recesses, wherein the plural first recesses have a first arrangement that is substantially the same as an arrangement of the plural second recesses.

11. The safety rail support system (100) of any of claims 8 to 10, wherein the first cam (118) is prohibited from rotating responsive to the first set of guide pins (134A, 134B) moving into the first locked position recesses (202), and the second cam (158) is prohibited from rotating responsive to the second set of guide pins moving into the second locked position recesses.

12. The safety rail support system (100) of any of claims 8 to 11, wherein the third rail component (170) is configured to be in the loaded position (106) while the first set of guide pins (134A, 134B) are disposed in the first locked position recesses (202) and the second set of guide pins are disposed in the second locked position recesses; or
wherein the first and second cams (118, 158) are allowed to rotate while the first set of guide pins (134A, 134B) are disposed in the first travel path recesses (206) and the second set of guide pins are disposed in the second travel path recesses.

13. The safety rail support system (100) of any of claims 8 to 12, further comprising:
a first mounting bracket (190A) configured to be operably coupled with a support structure (126) of the elevated platform (102) at a first location, the first mounting bracket (190A) including a first passage configured to receive a portion of the first support rod (116) and a portion of the first rail component (112); and
a second mounting bracket (190B) configured to be operably coupled with the support structure (126) of the elevated platform (102) at a second location, the second mounting bracket (190B) including a second passage configured to receive a portion of the second support rod (156) and a portion of the second rail component (152); and optionally further comprising one or more motors configured to activate movement of the first cam (118) and movement of the second cam (158) to control movement of the third rail component (170) between the loaded position (106) and the unloaded position (104).

14. The safety rail support system (100) of any of claims 8 to 13, wherein the first support rod (116), the first rail component (112), and the first cam (118) are concentric with each other about the first axis (114), and the second support rod (156), the second rail component (152), and the second cam (158) are concentric with each other about the second axis (154); and/or
the safety rail support system (100) further comprising one or more of a magnetic device (149) or a spring (920), wherein the one or more of the magnetic device (149) or the spring (920) are configured to encourage movement of the first cam (118) and the second cam (158) in one or more directions.

15. A method comprising:
moving a first rail component (170) of a cam locking assembly (110) into a loaded position (106), the cam locking assembly (110) including a cam (118) and a second rail component (112) configured to be disposed between the cam (118) and the first rail component (170), the cam locking assembly (110) configured to be operably coupled with an elevated platform (102), wherein the cam (118) is configured to move in a first linear direction (208) to move the first rail component (170) into the loaded position (106), wherein the first rail component (170) in the loaded position (106) is configured to block access onto or off of the elevated platform (102); and
moving the first rail component (170) into an unloaded position (104), wherein the cam (118) is configured to move in a second linear direction (210) to move the first rail component (170) into the unloaded position (104), wherein the first rail component (170) in the unloaded position (104) is configured to allow access onto or off of the elevated platform (102).
